# EUROPEAN PATENT APPLICATION

(11) **EP 2 042 455 A1**
(43) Date of publication of application: **01.04.2009**
(21) Application number: 08103517.2
(22) Date of filing: 14.04.2008
(51) Int. Cl.: B65G 51/02, D06F 93/00

(54) **System and method for sorting and/or transporting articles**

(30) Priority: 26.09.2007 EP 07117297
(71) Applicant: Dunnewolt Conveyors B.V., 4004 JK Tiel (NL)
(72) Inventor: Dunnewolt, Arvid, 2930 Brasschaat (BE)
(74) Representative: Aalbers, Arnt Reinier

(57) **Abstract**

A system (1) for sorting and/or transporting articles, such as textile articles, e.g. laundry is provided. The system (1) comprises an enclosed passageway (5), means for generating a fluid flow in said passageway (5) for the purpose of moving the articles ahead within said passageway, and a plurality of vacuum boxes (10). The system (1) is **characterised in that** said passageway (5) is provided with a plurality of entrances for articles to be transported through said passageway (5) to one of said vacuum boxes (10), and in that said system (1) comprises passageway switching means (12,13), such as valves or switches for directing articles moving through said passageway (5) into at least one of said vacuum boxes (10).

A method for sorting and/or transporting articles is **characterized in that** articles are supplied to the passageway (5) at a plurality of entrances and that said articles are directed into one or more vacuum boxes (10) selected from a plurality of vacuum boxes (10).

## Description

The present invention relates to the field of sorting and transporting of articles. More in particular the disclosure relates to a system and a method for sorting and transporting textile articles, e.g. laundry.
Systems for sorting and/or transporting articles, in particular textile articles, e.g. laundry, which comprise an enclosed passageway, means for generating an air flow in said passageway for the purpose of moving the articles ahead within said passageway and a plurality of vacuum boxes are known in the art.
E.g., US 4,849,999 discloses an apparatus for and a method of moving textile articles such as pieces of laundry or the like, comprising an enclosed passageway having two opposing open ends, and at least one bend between the two open ends; a vacuum source coupled with one of the two open ends and developing a subatmospheric pressure along the passageway and at the other open end of the passageway to draw textile articles into the other open end and through the passageway to the one open end; and a sensor located at the one bend and sensing textile articles drawn through the passageway. The sensor is coupled with an appropriate counter for accumulating a count of successive textile articles drawn through the passageway. According to US 4,849,999 a sorting station may comprise a plurality of passageways, or vacuum tubes, each connected to an accumulator bin, or vacuum box, for sorting and counting separate types of laundry. In operation, the articles are raised by an operator to just beneath the openings of the passageways, they then are drawn through it to the accumulator bin and underway counted by means of the sensor. The transported laundry pieces are dropped from the accumulator bins onto a conveyor for further processing.
Further, EP 1 820 758, by the present inventor, discloses an apparatus for transporting of goods, in particular textile. The apparatus comprises an enclosed passageway with an inlet and an outlet, means for generating an air flow in said passageway for the purpose of moving the goods ahead within said passageway. The apparatus comprises at least one rail for guiding trolleys, which rail or rails extend(s) along or through the vacuum box, in such a manner that a trolley connected thereto can be placed into the vacuum box and be filled, such that the goods are loaded into a trolley in the vacuum box.
According to EP 1 820 758, vacuum boxes may be provided with a plurality of passageways, or supply pipes, such that different inlets may be used for loading goods into the same vacuum box. The inlets of the supply pipes that lead to different vacuum boxes may be grouped into sorting points.
In these prior art systems, each sorting station or sorting point is connected to a vacuum box by an individual passageway.
This may render such systems, in particular large systems such as for industrial laundries, fairly complex, bulky and/or costly.
There is thus a desire for a simpler, possibly more cost-efficient system for transporting and/or sorting articles, in particular articles such as textile articles or laundry items.
To that end, a system for sorting and/or transporting articles is provided wherein a passageway is provided with a plurality of entrances for articles to be transported through said passageway to one of a plurality of vacuum boxes. Further, the system comprises passageway switching means, such as valves or switches, for directing articles moving through said passageway into at least one of said vacuum boxes.
Such system allows to reduce the number of passageways compared to a system of the prior art, while maintaining the possibility of transporting articles to a particular vacuum box from a plurality of places. The system allows sorting of articles upon appropriately setting the switching means. The passageway may serve a plurality of sorting entrances in a single sorting station and/or a plurality of sorting stations.
In the system, the reduced number of passageways compared to an equivalent system according to the prior art may also require less engines or other means for generating a fluid flow, such as a gas flow, in particular an air flow, in said passageway. In case of a gas flow, these means may efficiently be provided as a vacuum pump. The passageway may be part of a larger network of passageways.
Directing articles into a vacuum box may be achieved by connecting the passageway to that vacuum box, e.g. by opening a door or a valve between the passageway and the vacuum box.
In the system according to claim 2 the fluid flow may be maintained with relatively low energy costs. Also, noise, e.g. whistling of sucked-in air and/or sounds of articles being moved slamming against the walls of the passageway(s), may be reduced. Inadvertent falling out or drawing in of articles may also be prevented.
With the system according to claim 3 a number of articles may be collected and entered into the passageway at a time as a batch and be transported to a vacuum box. This may facilitate a sorting process since passageway switching means need not be set for individual articles. Further, sorting may be performed in accordance with the rate of supply of articles at the sorting station, whereas a collected batch may be entered into the passageway timed with an appropriate setting of the passageway switching means, or taking into account a particular interval between consecutive batches or batches of different sorting stations.
The system according to claim 4 may facilitate tracking of (numbers of) articles within the system. It may also serve for signalling that the receptacle is filled to a particular degree and thus that a particular batch size is reached. This may e.g. prevent batches getting stuck in the passageway and/or may prevent excessive mechanic stress on elements of the system due to too large batches. A suitable sensor is a weight sensor or a volume sensor, e.g. a light barrier.
The system according to claim 5 allows to correctly set the switches such that articles are directed to the intended vacuum box. In combination with the system according to claim 2 and/or claim 3, particular entrances to the passageway and possible according receptacles may consistently be mapped to particular vacuum boxes. Thus sorting is facilitated. Sorting may also be automated to a high degree. The controller may be programmed or otherwise adapted for optimization of the use of the passageway, e.g. by timing switching means such that a series of articles or batches is transported at particular intervals through the passageway and that collisions or mixing of batches may substantially prevented. In the system of claim 4, such timing may be dependent on signals from the sensor.
In the system according to claim 6, the articles may be loaded directly into a trolley of a conveyor system without requiring further handling. As set forth in EP 1 820 758, cited above, this may improve the efficiency of transporting of articles and may render a system for transporting and/or sorting articles relatively compact.
In the system according to claim 7, sorting of articles may be facilitated, in particular when the entrances at a sorting station are provided with receptacles, as defined in claim 3.
In accordance with the above, a method is provided for sorting and/or transporting articles, in particular textile articles, e.g. laundry, to a vacuum box through an enclosed passageway by means of a fluid flow in said passageway. In the method, articles are supplied to the passageway at a plurality of entrances and said articles are directed into one or more vacuum boxes selected from a plurality of vacuum boxes.
This method allows to use the passageway and a fluid flow therein relatively efficiently and to reduce the required number of passageways compared to the prior art.
The method may comprise that a number of articles are collected to form a batch and that the collected articles are transported through said enclosed passageway to said selected vacuum box in said batch.
This may facilitate the sorting e.g. by reducing operative actions on or in the system such as setting of switching means. A sorting operation may therefore be more robust. Also, the method may allow to reduce wear on the system. The method may also optimise use of the passageway and/or other resources.
These aspects and others will hereafter be fully explained with reference to the drawings showing an embodiment of the invention by way of example which should not be considered limiting.
Fig. 1 shows a schematic overview of a system for sorting and transporting articles according to the present invention.
Fig. 2 shows a schematic cross sectional view across the line A'-A" of the sorting station of Fig 1.

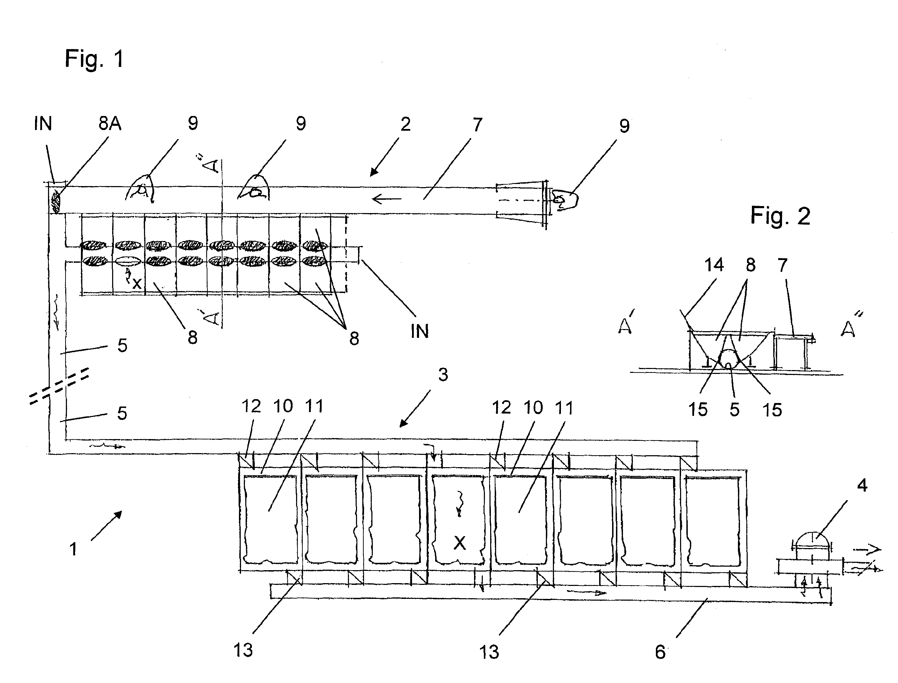

Fig. 1 shows a sorting system 1, comprising a sorting station 2, a collecting station 3 and a suction pump 4. The sorting station 2 and collecting station 3 are connected by a passageway or transport pipe 5. The sorting station 2 is shown in top plan view, the collecting station 3 is shown as a cross sectional view. The collecting station 3 and the vacuum pump 4 are connected by a further passageway or suction pipe 6.
The transport pipe 5 and suction pipe 6 are enclosed passageways, substantially fluid tight to allow maintaining a fluid flow therein and sufficiently smooth not to harm or snag articles being moved through the passageway by the fluid flow.
The sorting station 2 comprises a conveyor belt 7 and a plurality of receptacles or sorting bins 8, 8A, of which several are indicated. Operators are indicated with reference numeral 9. The operative direction of the conveyor is indicated with an arrow.
The collecting station 3 comprises a plurality of vacuum boxes 10, into which trolleys 11 of a conveying system (not shown) may be placed. Here, all vacuum boxes 10 are shown fitted with trolleys 11. The system is arranged such that the suction pump 4 may generate a fluid flow, indicated with wavy arrows, preferably a gas flow, e.g. an air flow, in the passageways 5, 6 and through the vacuum boxes. In the case of an air flow, the passageways may be provided with one or more air entrances such as valves or aspirating vents, e.g. at the positions marked with "IN" in Fig. 1 so as to ensure an air flow through the passageways 5, 6. A blowing engine for generating a pneumatic pressure flow rather than a suction flow through the passageways may also be provided. Such pneumatic pressure flow may be less sensitive to (pressure) leaks in the system 1. The fluid flow may pass through one or more vacuum boxes 10 and/or through a shunt (not shown) for bypassing the vacuum boxes 10. The shunt may be closable. An exhaust of the engine 4 and/or the shunt may be fed back to a valve or an aspirating vent (e.g. at the position marked "IN") to form an at least partial circulating system for the fluid. A circulating system may significantly enhance the operating efficiency of the engine with respect to the amount and/or size of articles to be transported.

The vacuum boxes 10 are connectable to the transport pipe 5 by means of switches 12 and connectable to the suction pipe 6 by means of optional switches 13. The switches 12 serve for directing articles moving through the transport pipe 5 into the according vacuum boxes 10, and for loading the articles into the trolleys 11 placed into the vacuum box 10. The transport pipe 5 is arranged over the vacuum boxes 10 such that articles may simply fall into the vacuum box 10 and into a trolley 11.

The switches 12 and 13 may serve for blocking fluid flow through a vacuum box 10. By appropriately opening or closing the shunt and the switches 12 and 13 of several or all vacuum boxes 10, the fluid flow through the system 1 may be forced to travel through one or more selected vacuum boxes 10.

The switches 12 and 13 may be of the same or of mutually different design and may be doors, locks, valves, or any other suitable type of switch. Switch 12 may also be formed as a guiding grid or similar device, which may capture articles and direct these into the vacuum box whereas the fluid flow through the passageway is essentially unaffected by the position of one or more such switches 12. Various other switching means may be contemplated.
Fig. 2 shows a cross sectional view of the sorting station 2 of Fig. 1, showing two sorting bins 8 on opposite sides above a transport pipe 5 and to the outside thereof. The conveyor 6 is arranged in front of the sorting bins 8 (cf. Fig. 1). A back panel 14 is provided behind the sorting bins 8. The sorting bins 8 are connectable to entrances to the transport pipe 5 by means of doors 15, forming at least a portion of the bottom and/or side wall of the sorting bin. Instead of the doors 15, the entrance may be closed with locks, valves and/or switches, for opening and closing the entrance to the transport tube.
One or more entrances may be wholly or partly open for a period of time or continuously, e.g. by being made of a grid-like material, allowing continuous air flow through the passageways 5, 6. This also allows removing odours and/or dust etc. from the according sorting bins 8 and their contents. This may improve the hygiene of the sorting station 2 and thus the operating conditions for operators 9. The Venturi effect of the fluid passing an aperture in case of a pressure flow system 1 may be employed for providing a suction effect at an entrance. For enhancing this, the transport pipe 5 may be provided with a constriction at or near the entrance.
For sorting and/or transporting, articles are presented on the conveyor belt 6 to one or more sorters. The sorters may be sorting apparatus or human sorting operators 9. Instead of the conveyor belt 6, a sorting table or any other suitable means for supplying articles may be provided, e.g. bulk supply or bins, wagons or trolleys of a conveying system. The sorter or sorters 9 pick up articles and put these in appropriate sorting bins 8.
At the end of the conveyor 6 an additional receptacle 8A is placed for collecting articles left unselected by the sorters and/or for refuse. These articles may be supplied to a different sorting station or again to the start of the conveyor 6 for (further) sorting or they may be transported to a vacuum box 10 or to a dump vacuum box for further processing or for dismissal as waste.
The sorting station 2 of Fig. 2 is suitable for one or more sorters 9 side-by-side. The back panel 14 prevents articles being tossed too far, facilitating sorting action. Other arrangements may accommodate facing sorters, sorting articles into the same receptacles. E.g., on either side of the sorting bins 8 a conveyor 7 may be arranged and a back panel 14 may be absent. More than two rows of sorting bins 8 may be connected to the transport pipe 5, possibly separated with back panels 14. A sorting station 2 may comprise a plurality of transport pipes 5, yielding to a different transport pipe 5, possibly having a larger diameter. Sorting articles into a sorting bin 8 also facilitates the operating conditions for sorters 9, compared to having to raise the articles to suction mouths as in prior art systems. A sorting station 2 may also be arranged such that the position of the sorters 9 is substantially above, rather than in front of, the sorting bins 8.
A plurality of sorting stations 2 and/or a plurality of collecting stations 3 may be connectable or connected to a transport pipe 5. Similarly, the collecting stations 3 may be connectable or connected to one or more suction pipes 6.
The sorting bins 8 may be provided with one or more sensors for counting and/or identifying articles put in the receptacle and/or detecting an amount thereof, e.g. an optical sensor such as a light barrier, a weight detector such as scales or a load cell and/or identification means such as an X-ray or Radio Frequency Identification Device detector (X-ray ID or XID, and RFID, respectively) or similar suitable devices.
Identification means may serve for identifying, and possibly tracking, individual objects or types of objects. In laundries, such means may serve for sorting textiles or sorts thereof from different sources, e.g. different institutions or individual persons, or for indicating for different washing processes etc. Numerous variants and uses may be considered by the skilled person.
After a predetermined amount of articles, which may be one article, but preferably is a greater number or a particular volume or weight, has been collected in a sorting bin 8, the door 15 of the sorting bin 8 may be opened such that the contents of that sorting bin 8 may be introduced into the transport tube 5. These articles are then moved forward by the fluid flow in the transport tube 5 to the collecting station 3. At the collecting station 3, switches 12 are set such that the articles are directed into a predetermined vacuum box 10. Preferably, the switches 12 are correctly set prior to the opening of the entrance, such that the fluid flow within the passageways 5, 6 may be substantially constant and predictable during the transport of the articles therethrough.
In Fig. 1, a switch 15 of the sorting station 2 and switches 12 and 13 of the collecting station 3 are set for connecting the sorting bin and the vacuum box marked with "X".
The shown vacuum boxes 10 are arranged for positioning and loading a trolley 11 of a conveying system therein such that the articles may be loaded into the trolley 11 directly, as set forth in more detail in the above-referenced EP 1 820 758. However, the vacuum boxes 10 may also provide the articles to different processing systems, processing stations or conveyors, such as well known in the art.
In a system 1 operated with a pressure flow, one or more vacuum boxes 10 may be left out and the articles may freely fall or be blown into a trolley 11 arranged underneath a switch 12. This may significantly simplify the system 1. A system 1 without vacuum boxes 10 may be particularly useful for transporting substantially clean articles, e.g. washed laundry, where factors of hygiene such as dust, odours, contamination etc. may be less or not relevant.
Such system also allows arranging switches 12 in positions where arranging a vacuum box 10 would be inefficient or impossible e.g. due to spatial constraints or safety reasons.
The system 1 may be arranged for the fluid flow to open or maintain open an entrance to a receptacle for collecting articles (to be) transported through the system 1 such as a trolley 11, e.g. by blowing open the opening of a flexible container or bag which may be part of the trolley 11. For facilitating this, the system 1 may be provided with a fluid directing duct or funnel, possibly integrated in a housing for the switch 12.
The amount of collected articles to be transported as described as a single batch may be determined by the sensor, e.g. to have a total batch weight of ca. 10 or 20 kg, a total volume of ca. 100 or 150 liter or a particular number of articles. Alternatively, a sorter may determine an optimum time or time interval for (re-)emptying the receptacle 8. The vacuum boxes 10, in particular the trolleys 11 preferably are sized for containing a plurality of such batches or batch sizes. The vacuum box 10 or trolley 11 may be sized to hold ca. 60 to 100 kg or about 500 to 1000 liter. Typically in industrial laundries, a suitable batch size for further processing is about 700-800 liter or about 60-70 kg dry weight of laundry, although smaller or larger batches may apply.
Thus, the provided system allows transporting of batched articles which may be faster and more efficient than transporting single items. At the same time, the components of the system, particularly the passageways 5, 6 and the vacuum pump 4, need not be dimensioned for accommodating batches that are fully-sized for later operations.
It is particularly efficient if the emptying of sorting bins 8 by the operation of the entrance doors 15 or other switches and the directing of articles to an appropriate vacuum box 10 are coordinated by a controller, preferably a programmable controller. The controller may be arranged for receiving signals from one or more of the sensors of the sorting bins 8.
In relatively large and/or complex systems, batches of articles may be underway a relatively long time, and switches 12 and 13 may be set at appropriate times for directing a particular batch to a particular vacuum box 10. Especially a programmable or computer operated controller may determine optimum switching times for some or all switches within the system. In addition, several transport pipes 5 may be connected or connectable to other transport pipes or passageways with switches, locks etc.
The invention is not restricted to the above described embodiments which can be varied in a number of ways within the scope of the claims. For instance, the system may be provided with a dump-exit and the controller may be programmed or otherwise adapted for directing articles or batches to the dump-exit in case it is expected that batches are or have become insufficiently separated for proper sorting to their respective intended vacuum boxes.
The sorting bins may be of any suitable shape and material for forming a receptacle for the articles to be transported, such as rigid walls, e.g. of metal or plastic material or may be cloth chutes.
The system and method of operation is equally useful for transporting articles without express sorting, e.g. counting or separating a stream of supplies into particular batch sizes.
Instead of a gas flow, through the passageway a liquid flow, e.g. a water flow is also conceivable. The - in that case possibly inappropriately named - vacuum boxes may then be constructed as baskets or nets etc. for collecting the transported articles.

## Claims

1. System (1) for sorting and/or transporting articles, such as textile articles, e.g. laundry, comprising
an enclosed passageway (5),
means (4) for generating a fluid flow in said passageway for the purpose of moving the articles ahead within said passageway (5), and
a plurality of vacuum boxes (10),
**characterised in that** said passageway (5) is provided with a plurality of entrances for articles to be transported through said passageway to one of said vacuum boxes (10), and
**in that** said system comprises passageway switching means (12,13), such as valves or switches, for directing articles moving through said passageway (5) into at least one of said vacuum boxes (10).

2. System (1) according to claim 1, comprising entrance switching means (15), such as doors, locks, valves and/or switches, for opening and closing said entrances to said passageway (5).

3. System (1) according to any one of the preceding claims, wherein at least one of said entrances is provided with a receptacle (8) for articles to be transported arranged on the outside of the passageway (5).

4. System (1) according to claim 3, wherein the at least one receptacle (8) is provided with a sensor for identifying articles and/or detecting an amount thereof in the receptacle (8).

5. System (1) according to any one of the preceding claims, comprising a controller for controlling and operating said passageway switching means (12,13) and/or said entrance switching means (15).

6. System (1) according to any one of the preceding claims, wherein at least one vacuum box (10) is arranged for positioning and loading a trolley (11) of a conveying system therein.

7. System (1) according to any one of the preceding claims, wherein a plurality of entrances is arranged for forming a sorting station (2) and the system (1) is provided with means (7), such as a conveyor belt, for supplying articles to be sorted to the sorting station (2).

8. Method for sorting and/or transporting articles, in particular textile articles, e.g. laundry, to a vacuum box (10) through an enclosed passageway (5) by means of a fluid flow in said passageway (5),
**characterized in that** articles are supplied to the passageway (5) at a plurality of entrances and that said articles are directed into one or more vacuum boxes (10) selected from a plurality of vacuum boxes (10).

9. Method according to claim 8, wherein a number of articles is collected to form a batch and wherein the collected articles are transported through said enclosed passageway (5) to said selected vacuum box (10) in said batch.
